# EUROPÄISCHE PATENTSCHRIFT

(11) **EP 1 413 515 B1**
(45) Veröffentlichungstag und Bekanntmachung des Hinweises auf die Patenterteilung: **03.05.2006**
(21) Anmeldenummer: 03023459.5
(22) Anmeldetag: 18.10.2003
(51) Int. Cl.: B64C 13/04, G05G 9/00

(54) **Vorrichtung zur Ansteuerung der Vorflügel und Landeklappen eines Flugzeuges**
Device for controlling leading and trailing edge flaps
Dispositif de commande pour volets de bord d'attaque et de fuite

(30) Priorität: 26.10.2002 DE 10249967
(43) Veröffentlichungstag der Anmeldung: 28.04.2004
(73) Patentinhaber: Airbus Deutschland GmbH, 21129 Hamburg (DE)
(72) Erfinder: Richter, Martin, Dipl.-Ing., 28717 Bremen (DE); Lang, Dieter, Dipl.-Ing., 28816 Stuhr (DE)
(74) Vertreter: Hansmann, Dierk

(56) Entgegenhaltungen:
- EP-A- 0 429 939
- FR-A- 1 484 907
- US-A- 3 850 388
- US-A- 4 363 098
- US-A- 4 393 730

## Beschreibung

Die Erfindung betrifft eine Vorrichtung zur Ansteuerung der Vorflügel und Landeklappen eines Flugzeuges unter Verwendung eines als Hebelmechanismus ausgeführten Kommandogebers zur Erzeugung von Sollkommandos für eine Verstellung der Vorflügel und Lahdeklappen, wobei der Hebelmechanismus ein mit zwei drehbaren Sensorscheiben mechanisch verbundenes Hebelgestänge aufweist, und wobei jede Sensorscheibe mit Signalgebern ausgestattet ist, die an zwei. Flugrechner zur Ermittlung und Weiterleitung von Stellsignalen an Verstelleinrichtungen der Vorflügel und Landeklappen des rechten und des linken Flügels elektrisch angeschlossen sind.

Bisherige Flugzeuge besitzen einen Kommandogeber mit einem einfachen Lastpfad hinsichtlich der Sollkommandos, wobei die Vorflügel und Landeklappen mittels zweier Flugrechner, denen über einen einzigen Hebelmechanismus mit zugehörigen Signalgebern das Sollkommando zugeführt wird, angesteuert und überwacht werden. Dieser Hebelmechanismus besitzt eine Steuerkulisse mit einer bestimmten Anzahl von Rasten, die einen Kommandogeber in Form eines Hebels in einer fixierten Stellung halten. Weiterhin sind als Schikanen ausgebildete Sperrmittel vorgesehen, die verhindern, daß der Hebel in einem Stellvorgang von der Null- auf die Vollstellung oder umgekehrt bewegt werden kann, ohne in den Zwischenstellungen anzuhalten. Bei diesem Kommandogeber besteht der Nachteil, daß bei Ausfall der singulären Mechanik oder Sensorik, beispielsweise durch Bruch oder mechanisches Klemmen innerhalb des Lastpfades oder innerhalb der Sensorik, das gesamte Vorflügel-und Landeklappensystem nicht mehr angesteuert werden kann. Um die Abhängigkeit des gesamten Systems von der Verfügbarkeit nur eines Kommandogebers zu vermeiden, kann ein alternativer Kontrollschalter zusätzlich eingeführt werden. Dieses bedeutet aber die Unterbringung von zusätzlichen Schaltern im Cockpit und spezielle Prozeduren für die Piloten im Falle der Nichtverfügbarkeit des normalen Kommandogebers. Eine solche vorrichtung ist aus US-A-4 363 098 bekannt.

Der Erfindung liegt nun die Aufgabe zugrunde, eine Vorrichtung der eingangs genannten Art zu schaffen, bei der ein mechanischer Bruch oder ein Klemmen eines Antrieb-/Lastpfades. bzw. ein Ausfall eines Signalgebers nicht zum Verlust der Funktion "Landeklappenkommando" führt.

Die Aufgabe wird erfindungsgemäß dadurch gelöst, daß der Hebelmechanismus doppelt ausgeführt und in zwei in ihrer Auslegung unabhängige aber in ihrer Funktion gekoppelte Lastpfade derart aufgeteilt ist, daß zwei Verstellhebel und zwei Gestänge funktional zu einem Kommandogeber zusammengefaßt sind, und daß die Signalgeber einer zugehörigen Sensorscheibe jeweils an einen der beiden Flugrechner angeschlossen sind.

Ausgestaltungen der Erfindung sind in den Unteransprüchen 2 und 3 beschrieben.

Ein Vorteil der Erfindung liegt neben dem Verzicht auf zusätzliche alternative Schalter inklusive alternativer Cockpit-Prozeduren darin, daß die Wahrscheinlichkeit eines Totalausfalles des Kommandogebers für die redundanten Flugrechner auf <10⁻⁹ /FH reduziert werden kann. Mit der erfindungsgemäßen Vorrichtung werden zwei redundante Verstellhebel funktional zu einem Bedienhebel mittels mechanischer Synchronization (Bolzen/Nieten o.ä) zusammengefaßt. Ein mechanischer Bruch eines Antriebs-/Lastpfades oder der komplette Ausfall eines Signalgebers führt nicht zum Verlust der Funktion "Landeklappenkommando", da der zweite nicht betroffene Pfad weiterhin eine Hebelfunktion inklusive gültigem Stellkommando über die Sensorik ermöglicht. Mit dem Wegfall der Notwendigkeit eines alternativen Bedienknopfes oder -hebels ist eine signifikante Vereinfachung der Systemauslegung (Rechnerfunktionalitäten, Cockpitinterface) sowie eine Beibehaltung bisheriger Bedienfunktionalität vorteilhafterweise verbunden.

In der Zeichnung ist ein Ausführungsbeispiel nach der Erfindung dargestellt, und zwar zeigt die einzige Figur eine Prinzipdarstellung einer Vorrichtung zur Ansteuerung und Überwachung von zeicherisch nicht dargestellten Vorflügeln und Landeklappen eines Flugzeuges. Hierbei werden ebenfalls nicht dargestellte Verstelleinrichtungen der Vorflügel und Landklappen von zwei Flugrechnern 1 und 2 mit Verstellsignalen beaufschlagt.

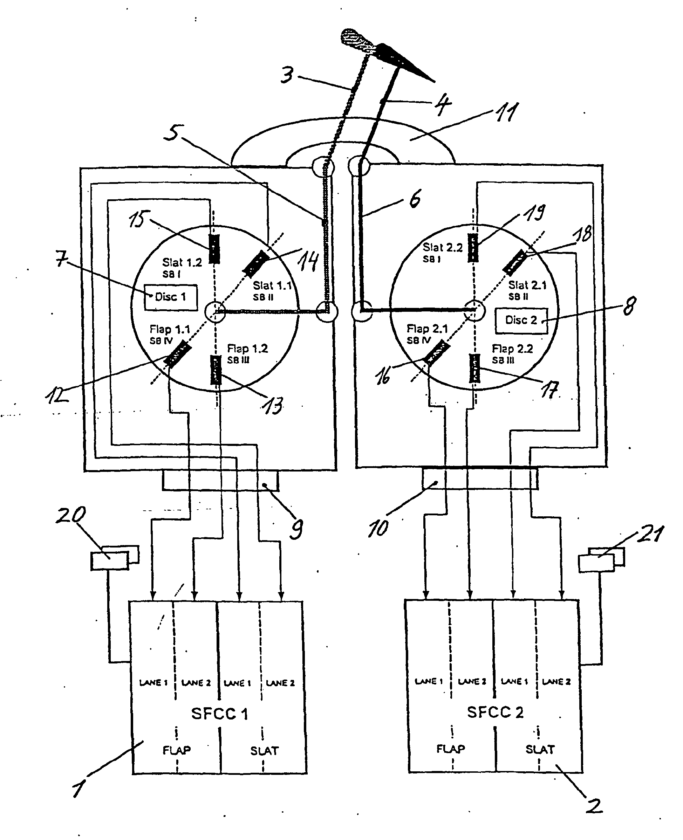

Der Hebelmechanismus der Vorrichtung nach Fig. 1 weist zwei Verstellhebel 3 und 4 sowie zwei Gestänge 5 und 6 auf. Die Gestänge 5, 6 sind einerseits mit den Verstellhebeln 3, 4 sowie andererseits mit jeweils einer drehbaren Sensorscheibe 7 bzw. 8 mechanisch verbunden. Hierbei sind die Verstellhebel 3, 4 und die Gestänge 5, 6 funktional zu einem Kommandogeber zusammengefaßt. Jede Sensorscheibe 7 bzw. 8 weist vier Signalgeber auf, beispielsweise Signalgeber 12 für Vorflügel-Rechner/Prozessor 1.1, Signalgeber 13 für Vorflügel-Rechner/Prozessor 1.2, Signalgeber 14 für Landeklappen-Rechner/Prozessor 1.1, Signalgeber 15 für Landeklappen-Rechner/Prozessor 1.2, Signalgeber 16 für Vorflügel-Rechner/Prozessor 2.1, Signalgeber 17 für Vorflügel-Rechner/Prozessor 2.2, Signalgeber 18 für Landeklappen-Rechner/Prozessor 2.1 und Signalgeber 19 für Landeklappen-Rechner/Prozessor 2.2. Alle Signalgeber 12 bis 15 bzw. 16 bis 19 einer zugehörigen Sensorscheibe 7 bzw. 8 sind jeweils über ein erstes oder zweites elektrisches Verbindungselement 9 bzw. 10, beispielsweise mit Hilfe von elektrischen Steckern, an den zugehörigen Flugrechner,1 bzw. 2 elektrisch angeschlossen. Mit 20 bzw. 21 ist jeweils ein erster bzw. zweiter Reset-Schalter im sogenannten Overhead-Panel bezeichnet.

Vorteilhafterweise ist der Hebelmechanismus so konstruiert, daß ein Klemmen einer Sensorscheibe 7 oder 8 immer durch - gegebenenfalls erhöhte - Bedienkräfte überdrückt werden kann. Die vom Klemmen nicht betroffene Seite des redundanten Hebelmechanismus kann weiterhin gültige Stellkommandos über die redundante Sensorik an die Flugrechner 1 oder 2 geben. Außerdem ist vorgesehen, daß die Verstellhebel 3 und 4 in einer blockadefrei ausgebildeten Kulisse 11 zu führen, bei der die Rasten auf einer Seite und die Schikanen auf der anderen Seite der Verstellhebel 3 bzw. 4 angeordnet sind. Somit können lose oder abgescherte Teile nicht zu einer Blockade führen. Damit keine unerwünschten Fremdkörper in den die Verstellhebel 3 bzw. 4 führenden Schlitz der Steuerkulisse 11 eindringen können, wird dieser Schlitz eine mechanische Abdeckung in Form einer Roll- oder Lamellentür, einer Ziehharmonika oder einer beweglichen Blech-/Kunststoffabdeckung aufweisen.

### Bezugszeichenliste

- 1: erster Flugrechner
- 2: zweiter Flugrechner
- 3: erster Verstellhebel
- 4: zweiter Verstellhebel
- 5: erstes Gestänge
- 6: zweites Gestänge
- 7: erste drehbare Sensorscheibe
- 8: zweite drehbare Sensorscheibe
- 9: erstes elektrisches Verbindungselement (Stecker)
- 10: zweites elektrisches Verbindungselement (Stecker)

- 11: Kulisse
- 12: Signalgeber für Vorflügel-Rechner/Prozessor 1:1
- 13: Signalgeber für vorflügel-Rechner/Prozessor 1.2
- 14: Signalgeber für Landeklappen-Rechner/Prozessor 1.1
- 15: Signalgeber für Landeklappen-Rechner/Prozessor 1.2
- 16: Signalgeber für Vorflügel-Rechner/Prozessor 2.1
- 17: Signalgeber für Vorflügel-Rechner/Prozessor 2.2
- 18: Signalgeber für Landeklappen-Rechner/Prozessor 2.1
- 19: Signalgeber für Landeklappen-Rechner/Prozessor 2.2
- 20: erster Reset-Schalter im Overhead-Panel
- 21: zweiter Reset-Schalter im Overhead-Panel

## Patentansprüche

1. Vorrichtung zur Ansteuerung der Vorflügel und Landeklappen eines Flugzeuges unter Verwendung eines als Hebelmechanismus ausgeführten Kommandogebers zur Erzeugung von Sollkommandos für eine Verstellung der Vorflügel und Landeklappen, wobei der Hebelmechanismus ein mit zwei drehbaren Sensorscheiben mechanisch verbundenes Hebelgestänge aufweist, und wobei jede Sensorscheibe mit Signalgebern ausgestattet ist, die an zwei Flugrechner zur Ermittlung und Weiterleitung von Stellsignalen an Verstelleinrichtungen der Vorflügel und Landeklappen des rechten und des linken Flügels elektrisch angeschlossen sind,
**dadurch gekennzeichnet, daß** der Hebelmechanismus doppelt ausgeführt und in zwei in ihrer Auslegung unabhängige aber in ihrer Funktion gekoppelte Lastpfade derart aufgeteilt ist, daß zwei Verstellhebel (3, 4) und zwei Gestänge (5, 6) funktional zu einem Kommandogeber zusammengefaßt sind, und daß die Signalgeber (12 bis 15 bzw. 16 bis 19) einer zugehörigen Sensorscheibe (7 bzw. 8) jeweils an einen der beiden Flugrechner (1 bzw. 2) elektrisch angeschlossen sind.

2. Vorrichtung nach Anspruch 1, **dadurch gekennzeichnet, daß** die Verstellhebel (3, 4) in einer blockadefrei ausgebildeten Kulisse (11) geführt sind, bei der die Rasten auf einer Seite und die Schikanen auf der anderen Seite der Verstellhebel (3, 4) angeordnet sind.

3. Vorrichtung nach Anspruch 2, **dadurch gekennzeichnet, daß** die die Verstellhebel (3, 4) führenden Schlitze der Kulisse (11) eine mechanische Abdeckung in Form einer Roll- oder Lamellentür, einer Ziehharmonika oder einer beweglichen Blech-/Kunststoffabdeckung aufweisen.

## Claims

1. Device for controlling the leading-edge flaps and trailing-edge flaps of an aircraft using a command generator, which is constructed as a lever mechanism, for generating specified commands for adjusting the Leading-edge flaps and trailing-edge flaps, wherein the lever mechanism has lever rods which are mechanically connected to two rotatable sensor discs, and wherein each sensor disc is provided with signal generators which are electrically connected to two flight computers for determining positioning signals and transmitting them to adjusting devices of the leading-edge flaps and trailing-edge flaps of the right-hand and the left-hand wing,
**characterised in that** the lever mechanism is of double construction and divided into two load paths, which are independent in their design but coupled in their function, such that two adjusting levers (3, 4) and two rods (5, 6) are functionally combined to form a command generator, and that the signal generators (12 to 15 and 16 to 19, respectively) of an associated sensor disc (7 and 8, respectively) are in each case electrically connected to one of the two flight computers (1 and 2, respectively).

2. Device according to Claim 1, **characterised in that** the adjusting levers (3, 4) are guided in a gate (11) which is formed so as to be blockade-free and in which the detents are disposed on one side and the baffles on the other side of the adjusting levers (3, 4).

3. Device according to Claim 2, **characterised in that** the slots of the gate (11) which guide the adjusting levers (3, 4) have a mechanical cover in the form of a rollup or slatted door, a concertina or a mobile sheet-metal/plastics cover.

## Revendications

1. Dispositif de commande de volets de bord d'attaque et de volets d'atterrissage d'un avion, utilisant un générateur d'ordres qui a la forme d'un mécanisme à leviers et qui est destiné à produire des ordres de consigne concernant la manoeuvre des volets de bord d'attaque et des volets d'atterrissage, le mécanisme à levier présentant une tringlerie de leviers reliée mécaniquement à deux disques capteurs tournants équipés chacun de générateurs de signaux qui sont raccordés électriquement à deux calculateurs de vol pour déterminer et transmettre des signaux aux dispositifs de manoeuvre des volets de bord d'attaque et de volets d'atterrissage de l'aile droite et de l'aile gauche, **caractérisé en ce que** le mécanisme à leviers est double et qu'il est divisé en deux circuits de charge indépendants en ce qui concerne leur conception, mais accouplés en ce qui concerne leurs fonctions, de manière que deux leviers de manoeuvre (3, 4) et deux tringleries (5, 6) sont réunis fonctionnellement pour donner un générateur d'ordres, les générateurs de signaux (12 à 15 ou 16 à 19) d'un disque capteur (7 ou 8) étant électriquement raccordés chacun à un des deux calculateurs de vol (1 ou 2).

2. Dispositif selon la revendication 1, **caractérisée en ce que** les leviers de manoeuvre (3, 4) sont guidés dans une coulisse (11) qui est dépourvue de blocage et dans laquelle les arrêts sont disposés d'un côté du levier de manoeuvre (3. 4) tandis que les chicanes sont disposées de l'autre côté.

3. Dispositif selon la revendication 2, **caractérisée en ce que** dans la coulisse (11), les fentes qui assurent le guidage des leviers de manoeuvre (3, 4) présentent une couverture mécanique sous la forme d'une porte à rouleaux ou à lamelles, d'une porte étirable en accordéon ou d'une couverture mobile en tôle ou en matière plastique.
